# EUROPEAN PATENT APPLICATION

(11) **EP 4 818 232 A1**
(43) Date of publication of application: **07.10.2026**
(21) Application number: 25227552.4
(22) Date of filing: 30.12.2025
(51) Int. Cl.: C08J 3/00, B29B 17/00, C08J 11/04, C08L 75/04, C08L 75/06, C08J 3/12

(54) **METHOD FOR RECYCLING THERMOPLASTIC MATERIAL**

(30) Priority: 31.03.2025 TW 114112401; 22.08.2025 TW 114132171
(71) Applicant: Pou Chen Corporation, Chang Hwa Hsien 506 (TW)
(72) Inventor: CHEN, Hui-Chuan, 506 Chang Hwa Hsien (TW); CHEN, Yu-Teng, 506 Chang Hwa Hsien (TW)
(74) Representative: Stöckeler, Ferdinand

(57) **Abstract**

A method for recycling a thermoplastic material includes the steps of: a) subjecting the thermoplastic material and a formulation including a plurality of thermoplastic polyurethane particles and a chain extender to a mixing process, thereby obtaining a first mixture; and b) subjecting the first mixture to granulation, thereby obtaining a plurality of organic polymer granules. The thermoplastic material is present in an amount ranging from 50 parts by weight to 90 parts by weight, and has a weight-average molecular weight ranging from 40000 g/mol to 90000 g/mol. The plurality of thermoplastic polyurethane particles are present in an amount ranging from 10 parts by weight to 50 parts by weight, and has a weight-average molecular weight ranging from 80000 g/mol to 200000 g/mol. The chain extender is present in an amount ranging from 0.5 parts by weight to 2 parts by weight.

## Description

The disclosure relates to a method for recycling a thermoplastic material.

Thermoplastic polymers, such as thermoplastic polyurethane, polypropylene and polyethylene terephthalate, are widely employed in the manufacture of components in industries such as automotive, footwear, and textiles due to their superior chemical stability and durability. However, procedures for manufacturing the components from the thermoplastic polymers often involve high-temperature processing. Although high temperatures do not affect the specifications of the components thus obtained, they can cause thermal degradation of the thermoplastic polymers, resulting in a decrease in material properties of the components. Additionally, processed products, which are produced after the components have undergone disposal, recycling and processing, fail to meet the standards required for reuse.

Therefore, developing a method for transforming the components, which have been disposed of and recycled, into materials that meet the standards required for reuse is one of the current research focuses in the industry.

Therefore, an object of the present disclosure is to provide a method for recycling a thermoplastic material, which can alleviate at least one of the drawbacks of the prior art.

According to an aspect of the disclosure, there is provided a method for recycling a thermoplastic material according to claim 1.

Other features and advantages of the disclosure will become apparent in the following detailed description of the embodiment(s) with reference to the accompanying drawings. It is noted that various features may not be drawn to scale.

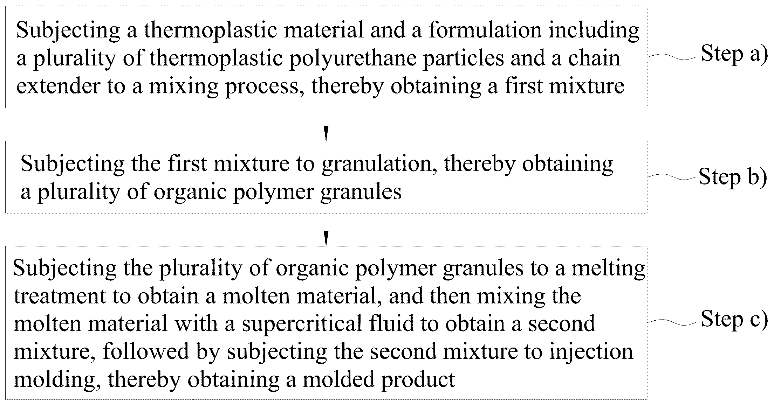

The sole figure is a flow diagram showing an embodiment of a method for recycling a thermoplastic material according to the present disclosure.

It is to be understood that, if any prior art publication is referred to herein, such reference does not constitute an admission that the publication forms a part of the common general knowledge in the art, in Taiwan or any other country.

For the purpose of this specification, it will be clearly understood that the word "comprising" means "including but not limited to", and that the word "comprises" has a corresponding meaning.

Unless otherwise defined, all technical and scientific terms used herein have the meaning commonly understood by a person skilled in the art to which the present disclosure belongs. One skilled in the art will recognize many methods and materials similar or equivalent to those described herein, which could be used in the practice of the present disclosure. Indeed, the present disclosure is in no way limited to the methods and materials described.

The present disclosure provides a method for recycling a thermoplastic material, which includes the steps of:
a) subjecting the thermoplastic material and a formulation including a plurality of thermoplastic polyurethane particles and a chain extender to a mixing process, thereby obtaining a first mixture; and
b) subjecting the first mixture to granulation, thereby obtaining a plurality of organic polymer granules.

The thermoplastic material is present in an amount ranging from 50 parts by weight to 90 parts by weight, and has a weight-average molecular weight ranging from 40000 g/mol to 90000 g/mol.

The plurality of thermoplastic polyurethane particles are present in an amount ranging from 10 parts by weight to 50 parts by weight, and has a weight-average molecular weight ranging from 80000 g/mol to 200000 g/mol.

The chain extender is present in an amount ranging from 0.5 parts by weight to 2 parts by weight, and is selected from the group consisting of a styrene-maleic anhydride copolymer, a polyfunctional epoxy copolymer having a functionality of not lower than 3 and less than 8, a polyfunctional polyisocyanate having a functionality of not lower than 3 and less than 8, and combinations thereof.

In some embodiments, the thermoplastic material is recycled from a component that undergoes a 3D printing process and includes a thermoplastic polyurethane. In some embodiments, the 3D printing process is selective laser sintering. The weight-average molecular weight of the thermoplastic material may be reduced by thermal degradation of the thermoplastic polyurethane which occurs during high-temperature processing. For example, during a process of manufacturing a shoe midsole by subjecting the thermoplastic polyurethane to the selective laser sintering (i.e., the high-temperature processing), the thermoplastic polyurethane undergoes the thermal degradation, resulting in reduction of a weight-average molecular weight of the shoe midsole to as low as 40000 g/mol to 90000 g/mol. When such thermoplastic material is subjected to high-temperature molding for reprocessing, it often shows inadequate viscosity in a molten state, leading to production of non-compliant products, and consequently, failure to achieve the purpose of reusing the thermoplastic material.

Specifically, when the functionality of the chain extender is not lower than 3, the formation of branched structures can be facilitated, resulting in a significant increase in the viscosity of the thermoplastic material after being subjected to the mixing process with the chain extender; and when the functionality of the chain extender is less than 8, the problem of gelation caused by cross-linking reactions that may occur during the mixing process and the subsequent processing steps can be mitigated.

In some embodiments, in step a), the mixing process may be performed at a temperature ranging from 160°C to 210°C. However, it is worth noting that conditions of the mixing process, including temperature, time, and rotation speed, can all be optimized based on different production machines and practical requirements.

According to the present disclosure, step b) involves granulating the first mixture obtained in step a) using, for example, a twin-screw extruder to obtain the plurality of organic polymer granules with better viscosity properties.

Referring to the figure, an embodiment of the method for recycling the thermoplastic material of the present disclosure may include, in addition to steps a) and b), step c), thus enabling the thermoplastic material to be reused and manufactured into various components.

According to the present disclosure, step c) involves subjecting the plurality of organic polymer granules to a melting treatment to obtain a molten material, and then mixing the molten material with a supercritical fluid to obtain a second mixture, followed by subjecting the second mixture to injection molding, thereby obtaining a molded product.

In some embodiments, a shear viscosity of the plurality of organic polymer granules may range from 270 cP to 1000 cP at a temperature of 190°C and a shear rate of 50 s⁻¹. In some embodiments, a shear viscosity of the plurality of organic polymer granules may range from 200 cP to 600 cP at a temperature of 190°C and a shear rate of 500 s⁻¹. In some embodiments, a shear viscosity of the plurality of organic polymer granules may range from 150 cP to 350 cP at a temperature of 190°C and a shear rate of 2000 s⁻¹.

In some embodiments, in step c), the melting treatment may be performed at a temperature ranging from 200°C to 220°C. In still some embodiments, in step c), the injection molding may be performed at a temperature ranging from 180°C to 220°C and under a pressure ranging from 20 kg/cm² to 100 kg/cm². For instance, the plurality of organic polymer granules may be subjected to the melting treatment at the temperature ranging from 200°C to 220°C to obtain the molten material, then the molten material is mixed with a supercritical carbon dioxide (which serves as the supercritical fluid and is present in an amount ranging from 25 wt% to 26 wt% based on 100 wt% of the molten material) to obtain a homogeneous phase mixture (which serves as the second material), and subsequently, the homogeneous phase mixture is subjected to the injection molding at a temperature ranging from 180°C to 220°C and under a pressure ranging from 20 kg/cm² to 100 kg/cm², thereby obtaining the molded product, such as a shoe midsole.

By virtue of the method according to the present disclosure in conjunction with provision of the formulation that includes the thermoplastic polyurethane particles and the chain extender, the material properties of the organic polymer granules thus obtained can be improved, thereby allowing the organic polymer granules to be reprocessed into various components.

The present disclosure will be described by way of the following examples. However, it should be understood that the following examples are intended solely for the purpose of illustration and should not be construed as limiting the present disclosure in practice.

### <EXAMPLES>

### Preparation of organic polymer granules from thermoplastic material

### Examples 1 to 12 (E1 to E12)

Referring to Table 1 below, in each of E1 to E12, a distinct amount of a recycled shoe midsole (i.e., r-LUV92A; serving as a thermoplastic material), a certain type and amount of thermoplastic polyurethane particles (SP9552 TW or U.90A10) and a certain type and amount of a chain extender (SMA3000, ADR4370, or C-HK) were subjected to a mixing process, so as to obtain a first mixture. After that, the first mixture was subjected to granulation, thereby obtaining organic polymer granules of each of E1 to E12.

### Comparative Examples 1 to 3 (CE1 to CE3)

Referring to Table 1 below, the procedures for preparing the organic polymer granules of CE1 were similar those of E1, except that in CE1, the thermoplastic material was present in an amount of 100 parts by weight, and the thermoplastic polyurethane particles and chain extender were omitted; the procedures for preparing the organic polymer granules of CE2 were similar to those of E7, except that in CE2, the chain extender was omitted; and the procedures for preparing the organic polymer granules of CE3 were similar to those of E2, except that in CE3, the thermoplastic material was present in an amount of 100 parts by weight, and the thermoplastic polyurethane particles were omitted. The organic polymer granules of each of CE1 to CE3 were thus obtained.

**Table 1**

| | Thermoplastic material | | Formulation | | | |
|---|---|---|---|---|---|---|
| | | | Thermoplastic polyurethane particles | | Chain extender | |
| | Source | Amount (part(s) by weight) | Type | Amount (part(s) by weight) | Type | Amount (part(s) by weight) |
| E1 | r-LUV92A¹ | 90 | SP9552 TW² | 10 | SMA3000⁴ | 1.5 |
| E2 | | 90 | | 10 | ADR4370⁵ | 1.5 |
| E3 | | 80 | | 20 | | 1.5 |
| E4 | | 70 | | 30 | | 1.5 |
| E5 | | 60 | | 40 | | 1.5 |
| E6 | | 50 | | 50 | | 1.5 |
| E7 | | 80 | U.90A10³ | 20 | | 1.5 |
| E8 | | 80 | | 20 | | 1.0 |
| E9 | | 80 | | 20 | | 0.5 |
| E10 | | 80 | | 20 | SMA3000 | 1.8 |
| E11 | | 80 | | 20 | C-HK⁶ | 1.5 |
| E12 | | 80 | | 20 | C-HK | 1.0 |
| CE1 | | 100 | -⁷ | - | - | - |
| CE2 | | 80 | U.90A10 | 20 | - | - |
| CE3 | | 100 | - | - | ADR4370 | 1.5 |

| | | | | | | |
|---|---|---|---|---|---|---|
| 1. "r-LUV92A" was the recycled shoe midsole that had undergone selective laser sintering, contained a thermoplastic polyurethane, and had a weight-average molecular weight of 46000 g/mol and a Shore A hardness of 92. 2. "SP9552 TW" was polyether-based thermoplastic polyurethane pellets from BASF Elastollan^{®} series, and had a weight-average molecular weight of 85000 g/mol and a Shore A hardness of 95. 3. "U.90A10" was polyester-based thermoplastic polyurethane pellets from Covestro Utechllan^{®} series, and had a weight-average molecular weight of 180000 g/mol and a Shore A hardness of 90. 4. "SMA3000" was a styrene-maleic anhydride copolymer manufactured by Cray Valley. 5. "ADR4370" was a polyfunctional epoxy copolymer manufactured by BASF, and had a functionality ranging from 3 to 6. 6. "C-HK" (the abbreviation for CORONATE HK) was a polyfunctional polyisocyanate manufactured by Tosoh, and had a functionality of 3. 7. "-": indicates was omitted | | | | | | |

### Measurement of shear viscosity of organic polymer granules

The organic polymer granules of each of E1 to E12 and CE1 to CE3 were subjected to measurement of shear viscosity in accordance with American Society for Testing and Materials (ASTM) D3835-24 (2024) standard at a temperature of 190°C and a shear rate of 50 s⁻¹, 500 s⁻¹, or 2000 s⁻¹. The results are shown in Table 2 below.

**Table 2**

| | Shear viscosity (cP) | | |
|---|---|---|---|
| Shear rate | 50 s⁻¹ | 500 s⁻¹ | 2000 s⁻¹ |
| E1 | 592 | 330 | 159 |
| E2 | 580 | 313 | 165 |
| E3 | 635 | 355 | 170 |
| E4 | 672 | 336 | 179 |
| E5 | 884 | 456 | 284 |
| E6 | 975 | 573 | 322 |
| E7 | 685 | 402 | 208 |
| E8 | 457 | 356 | 186 |
| E9 | 294 | 203 | 152 |
| E10 | 645 | 335 | 168 |
| E11 | 633 | 364 | 185 |
| E12 | 438 | 330 | 171 |
| CE1 | 106 | 95 | 77 |
| CE2 | 258 | 196 | 144 |
| CE3 | 238 | 170 | 136 |

Referring to Table 2, in terms of the shear viscosities measured at 190°C and the shear rate of 50 s⁻¹, the organic polymer granules of E9 had the lowest shear viscosity, i.e., 294 cP, among E1 to E12; however, such lowest shear viscosity was still much higher than the highest shear viscosity among CE1 to CE3, namely, the shear viscosity of the organic polymer granules of CE2, i.e., 258 cP. In addition, in terms of the shear viscosities measured at 190°C and the shear rate of 500 s⁻¹ or 2000 s⁻¹, the shear viscosity of the organic polymer granules of each of E1 to E12 was significantly higher than that of each of CE1 to CE3, confirming that the organic polymer granules produced by steps a) and b) of the method according to the preset disclosure indeed exhibit superior material properties.

### Preparation of molded product

### E3 to E5, E7 to E9, and CE2

The organic polymer granules of each of E3 to E5, E7 to E9, and CE2 were subjected to a melting treatment performed at a temperature ranging from 200°C to 220°C, so as to obtain a molten material, followed by mixing the molten material with a supercritical fluid (i.e., a supercritical nitrogen) to obtain a second mixture. Next, the second mixture was subjected to injection molding performed at 210 °C and under a pressure of 86 kg/cm², thereby obtaining a molded product of each of E3 to E5, E7 to E9, and CE2.

### Measurement of mechanical properties of molded product

The molded product of each of E3 to E5, E7 to E9, and CE2 was subjected to measurement of hardness in accordance with ASTM D2240-15 (2021) standard, measurement of specific gravity in accordance with ASTM D297 (2022) standard, measurement of tensile strength in accordance with ASTM D412-16 (2021) standard, measurement of elongation in accordance with ASTM D412-16 (2021) standard, and measurement of rebound resilience in accordance with ASTM D2632-15 (2019) standard. The results are shown in Table 3 below.

**Table 3**

| | Example | | | | | | Comparative Example |
|---|---|---|---|---|---|---|---|
| | E3 | E4 | E5 | E7 | E8 | E9 | CE2 |
| Hardness (Asker C) | 50-53 | 50-55 | 50-55 | 50-55 | 48-52 | 45-50 | 58-65 |
| Specific gravity (g/cm³) | 0.26 | 0.23 | 0.22 | 0.21 | 0.20 | 0.19 | 0.32 |
| Tensile strength (kg/cm²) | 28.9 | 27.1 | 25.0 | 24.8 | 24.5 | 22.9 | 35.8 |
| Elongation (%) | 328 | 312 | 325 | 307 | 317 | 286 | 425 |
| Rebound resilience (%) | 26 | 24 | 28 | 30 | 32 | 33 | 23 |

Referring to Table 3, the hardness of the molded product of each of E3 to E5 and E7 to E9 was within the range from 45 Asker C to 55 Asker C, while the hardness of the molded product in CE2 was within the range from 58 Asker C to 65 Asker C, indicating that the molded products of E3 to E5 and E7 to E9 had better elasticity compared to the molded product of CE2. The specific gravity of the molded product of each of E3 to E5 and E7 to E9 was within the range from 0.19 g/cm³ to 0.26 g/cm³, which was much lower than the specific gravity of the molded product of CE2, i.e., 0.32 g/cm³, demonstrating that the molded products of E3 to E5 and E7 to E9 exhibited lightweight characteristics. Moreover, the tensile strength of the molded product of each of E3 to E5 and E7 to E9 was within the range from 22.9 kg/cm² to 28.9 kg/cm², which was much lower than the tensile strength of the molded product of CE2, i.e., 35.8 kg/cm², demonstrating that the molded products of E3 to E5 and E7 to E9 exhibited superior flexibility (if the molded product of each of E3 to E5 and E7 to E9 was a shoe material, wearing comfort can be enhanced). The elongation of the molded product of each of E3 to E5 and E7 to E9 was within the range from 286% to 328%, which was much lower than the elongation of the of the molded product of CE2, i.e., 425%, meaning that the molded products of E3 to E5 and E7 to E9 were less prone to deformation and had better supportiveness. The rebound resilience of the molded product of each of E3 to E5 and E7 to E9 was within the range from 24% to 33%, which was higher than the rebound resilience of the molded product of CE2, i.e., 23%, indicating that the molded products of E3 to E5 and E7 to E9 had faster rebound speeds, which accelerate running pace. It can be concluded that all of the above-mentioned mechanical properties of the molded product of each of E3 to E5 and E7 to E9 were better than those of CE2, confirming that by virtue of steps a) and b) of the method according to the present disclosure, the material properties of the organic polymer granules obtained from the thermoplastic materials (i.e., the recycled shoe midsoles) can be improved, thereby enhancing the mechanical properties (e.g., hardness, specific gravity, and tensile strength) of the molded products prepared from the organic polymer granules, and hence ensuring the industrial application value of such molded products.

In summary, in the method for recycling the thermoplastic material of the present disclosure, by subjecting the thermoplastic material and the formulation to the mixing process to obtain the first mixture, and by subjecting the first mixture to granulation, the organic polymer granules thus obtained can be used to produce the molded product that meets the required specifications, thereby achieving recycling of the thermoplastic material and fulfilling the purpose of the present disclosure.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A method for recycling a thermoplastic material, **characterized by** the steps of:
a) subjecting the thermoplastic material and a formulation including a plurality of thermoplastic polyurethane particles and a chain extender to a mixing process, thereby obtaining a first mixture; and
b) subjecting the first mixture to granulation, thereby obtaining a plurality of organic polymer granules,
wherein the thermoplastic material is present in an amount ranging from 50 parts by weight to 90 parts by weight, and has a weight-average molecular weight ranging from 40000 g/mol to 90000 g/mol,
wherein the plurality of thermoplastic polyurethane particles are present in an amount ranging from 10 parts by weight to 50 parts by weight, and has a weight-average molecular weight ranging from 80000 g/mol to 200000 g/mol, and
wherein the chain extender is present in an amount ranging from 0.5 parts by weight to 2 parts by weight, and is selected from the group consisting of a styrene-maleic anhydride copolymer, a polyfunctional epoxy copolymer having a functionality of not lower than 3 and less than 8, a polyfunctional polyisocyanate having a functionality of not lower than 3 and less than 8, and combinations thereof.

2. The method as claimed in claim 1, wherein the thermoplastic material is recycled from a component that undergoes a 3D printing process, and includes a thermoplastic polyurethane.

3. The method as claimed in claim 2, wherein the 3D printing process is selective laser sintering.

4. The method as claimed in any one of claims 1 to 3, wherein in step a), the mixing process is performed at a temperature ranging from 160°C to 210°C.

5. The method as claimed in any one of claims 1 to 4, further comprising step c) of subjecting the plurality of organic polymer granules to a melting treatment to obtain a molten material, and then mixing the molten material with a supercritical fluid to obtain a second mixture, followed by subjecting the second mixture to injection molding, thereby obtaining a molded product.

6. The method as claimed in any one of claims 1 to 5, wherein a shear viscosity of the plurality of organic polymer granules ranges from 270 cP to 1000 cP at a temperature of 190°C and a shear rate of 50 s⁻¹.

7. The method as claimed in any one of claims 1 to 5, wherein a shear viscosity of the plurality of organic polymer granules ranges from 200 cP to 600 cP at a temperature of 190°C and a shear rate of 500 s⁻¹.

8. The method as claimed in any one of claims 1 to 5, wherein a shear viscosity of the plurality of organic polymer granules ranges from 150 cP to 350 cP at a temperature of 190°C and a shear rate of 2000 s⁻¹.

9. The method as claimed in claim 5, wherein in step c), the melting treatment is performed at a temperature ranging from 200°C to 220°C.

10. The method as claimed in claim 5, wherein in step c), the injection molding is performed at a temperature ranging from 180°C to 220°C and under a pressure ranging from 20 kg/cm² to 100 kg/cm².
